# FASCICULE DE BREVET EUROPEEN

(11) **EP 2 294 389 B1**
(45) Date de publication et mention de la délivrance du brevet: **15.10.2014**
(21) Numéro de dépôt: 09779933.2
(22) Date de dépôt: 24.06.2009
(51) Int. Cl.: G01N 21/94, G06T 7/00, G01N 15/14

(54) **PROCÉDÉ ET DISPOSITIF DE QUANTIFICATION DES CONTAMINANTS PARTICULAIRES DE SURFACE**
VERFAHREN UND VORRICHTUNG ZUR QUANTIFIZIERUNG PARTIKELFÖRMIGER OBERFLÄCHENVERUNREINIGUNGEN
METHOD AND DEVICE FOR QUANTIFYING SURFACE PARTICULATE CONTAMINANTS

(30) Priorité: 26.06.2008 FR 0854261
(43) Date de publication de la demande: 16.03.2011
(73) Titulaire: Commissariat à l'Énergie Atomique et aux Énergies Alternatives, 75015 Paris (FR)
(72) Inventeur: TOVENA-PECAULT, Isabelle, F-33850 Leognan (FR)
(74) Mandataire: Ilgart, Jean-Christophe
(86) Numéro de dépôt international: PCT/EP2009/057931
(87) Numéro de publication internationale: WO 2010/003825

(56) Documents cités:
- EP-A- 0 265 229
- US-A- 3 362 141
- US-A- 5 253 538
- US-A- 5 493 123
- US-B2- 7 010 991
- SHAW W P, SOPHER R P: "High Speed Automatic Particle Counter. February 1975." IBM TECHNICAL DISCLOSURE BULLETIN, vol. 17, no. 9, 1 février 1975 (1975-02-01), page 2588, XP002514852 New York, US
- BHARAT BHUSHAN ET AL: "Detection and Sizing of Particulate Contamination in Rigid Disk Drives: Instruments and Sampling Techniques" IEEE TRANSACTIONS ON MAGNETICS, IEEE SERVICE CENTER, NEW YORK, NY, US, vol. 35, no. 2, 1 mars 1999 (1999-03-01), pages 956-962, XP011032217 ISSN: 0018-9464
- GERMER T A ET AL: "Particle Size Metrology: Comparison Between Aerosol Electrical Mobility and Laser Surface Light Scattering Techniques" AIP CONFERENCE PROCEEDINGS, AMERICAN INSTITUTE OF PHYSICS, NEW YORK,NY, vol. 788, 15 mars 2005 (2005-03-15), pages 579-583, XP007907196 ISSN: 0094-243X

## Description

### DOMAINE TECHNIQUE

L'invention concerne le domaine de l'ultra-propreté, à base de matériaux (ou nanomatériaux), fabriqués ou assemblés dans des salles propres ou zones à environnement maîtrisé apparenté.

L'invention concerne plus particulièrement l'amélioration de l'analyse quantitative des contaminants particulaires de surface susceptibles de se trouver dans ces salles ou zones propres.

L'invention peut s'appliquer également au contrôle et à la caractérisation des surfaces.

### ART ANTÉRIEUR

Un contaminant est désigné dans la norme ISO 14644-4 comme suit: «Tout entité particulaire, moléculaire, non particulaire ou biologique susceptible de produire un effet indésirable sur le produit ou le procédé ».

Dans le cadre de l'invention, on s'intéresse exclusivement à la contamination particulaire de surface. A ce jour, un seul standard permet de classer l'état de propreté des surfaces sur lesquelles sont présents des contaminants particulaires déposés : il s'agit de la norme IEST 1246 D.

Un nouveau standard international ISO 14644-9 pour classer l'état de propreté particulaire des surfaces est en cours d'approbation. Les contaminants particulaires surfaciques considérés selon ce nouveau standard sont ceux dont la taille unitaire est généralement comprise entre 0,05 µm et 500 µm pour les besoins de la classification. Outre cette large gamme de taille, le nouveau standard propose de considérer de nouvelles gammes spécifiques comprises dans cette large gamme. Il s'agit selon ce nouveau standard de déterminer le nombre par m² de ces contaminants particulaires surfaciques. En outre, des contaminants d'origine biologique peuvent être assimilés à des particules de surfaces quand ils sont morts. Des contaminants biologiques morts entrent donc dans le cadre de l'invention.

A ce jour, pour effectuer le contrôle de la propreté particulaire des surfaces selon la norme IEST 1246 D, on utilise des sondes qui fonctionnent toutes plus ou moins sur le même principe : il s'agit d'effectuer un soufflage d'air filtré sur une surface puis une aspiration de l'air contenant les contaminants particulaires éventuels.

Ainsi, un appareil largement répandu dans le domaine est celui commercialisé sous le nom Q-III® par la société Dryden Engineering dont le principe de fonctionnement par comptage ultérieur à l'aspiration, à l'aide d'un laser à diode, est décrit dans le brevet US 5,253,538. Les conditions opératoires de cet appareil telles qu'indiquées dans le brevet et dans la notice d'utilisation indiquent que la tête de détection défile sur l'objet à analyser à une vitesse de 10 LFPM (Linear Feet Per Minute) avec des durées d'échantillonnage de 1, 3 ou 6 secondes (voir colonne 4, lignes 49-51 du brevet). Cet appareil est conçu avec cinq canaux d'aspiration respectivement de 0,3 µm, 0,5 µm, 1.0 µm, 5.0 µm et 10 µm.

Un inconvénient identifié de cet appareil par la société Applied Materials concerne le non alignement potentiel de la tête de sonde avec un objet à analyser lorsque celui-ci n'est pas parfaitement plan. Aussi, Applied Materials a envisagé une solution, telle que décrite dans le brevet US 5,939,647, qui consiste à rendre rotative la tête d'échantillonnage afin de permettre une flexibilité de positionnement.

Le document Shaw et al., "High Speed Automatic Particle Counter", IBM Technical Disclosure Bulletin, vol. 17, no. 9, 1 février 1975, page 2588, décrit une méthode de quantification de particules sur une surface par éclairage rasant et la prise d'une seule photo de la lumière diffusée par les particules sur la surface.

Le brevet US 7,010,991-B2 enseigne un procédé de détection de particules de surface qui comprend une étape d'aspiration des particules de la surface dans un courant d'air, afin de les livrer à un compteur de particules.

Les études récentes de la demanderesse ont montré que, quel que soit l'appareil de quantification actuellement commercialisé et fonctionnant sur le principe combiné de soufflage d'air filtré/aspiration, les mesures réalisées n'étaient pas fiables et qu'en outre elles ne couvraient pas le spectre de tailles de particules envisagé dans la nouvelle norme ISO 14644-9.

Le but de l'invention est alors de proposer une solution qui permette de répondre à cette double problématique.

### EXPOSÉ DE L'INVENTION

A cet effet, l'invention a pour objet un procédé de quantification de contaminants particulaires de surface susceptibles d'être présents sur un objet, selon lequel on réalise les étapes suivantes :
a) échantillonnage d'une surface à analyser,
b) éclairage rasant de la surface échantillonnée,
c) réalisation d'une première photo numérique de la surface éclairée pour déterminer des éléments de taille unitaire supérieure à une valeur XI,
d) soufflage d'air propre sur la surface photographiée,
e) aspiration de l'air soufflé contenant les contaminants particulaires éventuels vers au moins un dispositif de comptage adapté pour quantifier des particules de taille unitaire inférieure à une valeur X2,
f) réalisation d'une deuxième photo numérique de la même surface éclairée dans les mêmes conditions que la première photo numérique afin de différencier, parmi les éléments, les contaminants particulaires des défauts surfaciques de l'objet,
g) quantification des contaminants particulaires de taille unitaire supérieure à X1 par détermination de la proportion de pixels photographiques appartenant aux contaminants de surface éventuels en comparant la première et la deuxième photos numériques. Les étapes a) à g) sont réalisées avantageusement sans déplacement relatif par rapport à l'objet.

Selon un mode de réalisation avantageux de l'invention, on réalise une étape supplémentaire h) selon laquelle, si X1 est inférieure à X2, on effectue une comparaison des quantifications entre les particules aspirées et comptées et les particules quantifiées par photo numérique.

Le(s) dispositif(s) de comptage selon l'invention peu(ven)t être constitué(s) par tout type d'appareils mettant en oeuvre une technologie de métrologie des aérosols. Par exemple, on peut envisager de préférence un dispositif de comptage optique, de type diodes laser afin de quantifier des particules inférieures à 10 µm. On peut aussi envisager un compteur à noyaux de condensation afin de quantifier des particules de taille nanométrique. On peut en outre considérer des compteurs utilisant un comptage de type électrique, tel que les compteurs E.L.P.I (« Electrical Low Pressure Impactor » en anglais).

Dans le cadre de l'invention, on pourra associer en ligne, c'est-à-dire sur la même voie d'aspiration, un dispositif de comptage optique avec un compteur à noyaux de condensation et/ou avec un compteur E.L.P.I.

Typiquement, on peut utiliser un compteur optique, de type diode laser dont la limite inférieure de comptage X3 est de l'ordre de 0,1 µm et la limite supérieure X2 est de l'ordre de 10µm.

De même, on peut utiliser un compteur à noyaux de condensation dont la limite inférieure de comptage X3 correspond à environ 5 à 7 nm (nanomètres).

Ainsi, dans le cadre de l'invention, on peut quantifier :
- en cas de non recouvrement de valeur (c'est-à-dire X1 > X2), la gamme de taille entre X3 et X2 (par exemple entre 0,1 µm et 5µm) directement par comptage et la gamme au-delà de X1 (par exemple au-delà du µm et jusqu'au cm) directement par comparaison photo et calcul numérique,
- en cas de recouvrement de valeur (c'est-à-dire X1 < X2), la gamme entre X3 et X1, entre X1 et X2 et au-delà de X2 par comparaison des quantifications entre les particules aspirées et comptées et les particules quantifiées par photo numérique.

Bien entendu, la valeur X1 est dépendante du dispositif photo numérique utilisé et la valeur X2 est dépendante du dispositif de comptage. L'homme du métier veillera ainsi à adapter les moyens respectivement de comptage optique et de photographie numérique en fonction de la répartition statistique qu'il cherche à obtenir de manière privilégiée. Par exemple, en fonction de la nature de l'objet, il pourra chercher à déterminer statistiquement avec une précision accrue, les particules comprises entre respectivement 1 et 5 µm et entre 5 µm et 10 µm. Il pourra alors choisir un dispositif photo-numérique de résolution de l'ordre 5 µm (X1) et un compteur optique comptant les particules entre 1 µm (X3) et 10 µm (X2).

Par « air propre », il faut comprendre ici et dans le cadre de l'invention, que l'air soufflé est filtré de sorte à ne pas contenir de particules de taille supérieure à une valeur donnée de préférence égale à la limite inférieure X3 de comptage du dispositif.

L'inventeur a su mettre en évidence que les appareils de détection et comptage utilisant le principe combiné de soufflage/aspiration cumulaient deux limites : d'une part au niveau de l'extraction proprement dite des particules et d'autre part au niveau de la détection ou analyse proprement dite des particules.

L'inventeur a donc décidé de repousser respectivement chacune de ces deux limites.

L'amélioration de l'extraction fait l'objet de la demande de brevet déposée le même jour que la présente demande et intitulée « procédé et dispositif de quantification des contaminants particulaires de surface par extraction améliorée ».

En ce qui concerne l'autre limite, l'inventeur a identifié que les sondes selon l'état de l'art étaient nécessairement utilisées avec un déplacement relatif par rapport à l'objet et qu'un tel déplacement ne permettait pas d'avoir une mesure fiable et reproductible. En effet, au cours de chaque échantillonnage lors du déplacement de la sonde, la concentration particulaire de surface est modifiée. Cette concentration est à priori diminuée, sauf si le contact entre la sonde et la surface à échantillonner altère l'une ou l'autre des surfaces en contact et génère ainsi des particules. Ainsi, le nombre de particules détecté n'est pas nécessairement celui exactement présent initialement sur l'objet dans une zone donnée.

En outre, l'inventeur a pu constater que les sondes selon l'état de l'art devaient être déplacées sur l'objet à contrôler uniquement par l'intermédiaire du poignet d'un opérateur. Cela rend la mesure très dépendante de la pression et de l'inclinaison induits sur la sonde.

L'inventeur a ainsi conclu qu'une détection statique et statistique par gammes de tailles de particules (d'une part correspondant à l'intervalle X3-X2 lié au dispositif de comptage, par exemple entre 0,1 à 10 µm, à l'intervalle éventuel de recouvrement X1-X2, par exemple entre 5 et 10 µm et au-delà de X1, par exemple au-delà de 10 µm) était plus appropriée.

En d'autres termes, le procédé selon l'invention permet de confiner proprement un échantillon de surface d'un objet à qualifier en termes de propreté particulaire ou biologique de surface.

Le procédé selon l'invention permet en outre, grâce à la prise de photos numériques et à la comparaison effectuée avant et après soufflage et extraction, de connaître la distribution surfacique des contaminants particulaires sur l'objet.

Selon un mode de réalisation avantageux, on collecte en aval du dispositif de comptage les particules aspirées. On peut ainsi réaliser des analyses physico-chimiques ultérieures de la collecte. On peut également confiner les particules aspirées et collectées et leur faire subir un traitement spécifique en fonction du danger inhérent à la nature des particules (toxicité chimique ou radio chimique...).

De préférence, on réalise un éclairage rasant dans la gamme des ultra-violets. On peut ainsi distinguer les contaminants particulaires des défauts de surface susceptibles d'être présents sur l'objet.

L'invention concerne également un dispositif de quantification de contaminants particulaires de surface susceptibles d'être présents sur un objet, comprenant :
- des moyens d'éclairage pour réaliser un éclairage rasants d'une surface échantillonnée,
- des moyens de photographie numérique pour réaliser des photos numériques de la surface éclairée, les moyens de photographie numérique étant adaptés pour déterminer des éléments de taille unitaire supérieure à une valeur X1,
- des moyens de soufflage et d'aspiration pour respectivement souffler de l'air propre sur la surface photographiée et pour aspirer l'air soufflé contenant des contaminants particulaires éventuels,
- un dispositif de comptage adapté pour quantifier des particules de taille unitaire inférieure à une valeur X2,
- des moyens de calcul numérique pour déterminer la proportion de pixels photographiques appartenant aux contaminants de surface de taille unitaire supérieure à une valeur X1 par comparaison entre deux photos numériques réalisées respectivement avant et après soufflage et aspiration.

Les moyens de soufflage d'air propre selon l'invention pourront avantageusement comprendre les jets obliques et rasants tels que proposés dans la demande de brevet déposé le même jour que la présente demande et intitulée << procédé et dispositif de quantification des contaminants particulaires de surface par extraction améliorée ».

En tant que moyen de collecte, le dispositif peut comprendre avantageusement une membrane de filtration dont la taille de pore est de l'ordre de X3, la membrane étant montée dans les moyens d'aspiration afin de collecter les contaminants particulaires aspirés. La taille de pore X3 est donc de l'ordre de la valeur inférieure de taille des particules effectivement comptées par le(s) dispositif(s) de comptage utilisés selon l'invention.

Les moyens d'éclairage peuvent comprendre avantageusement des moyens d'éclairage ultraviolet qui permettent de détecter de manière sélective les particules fluorescentes.

Les moyens d'éclairage sont avantageusement des diodes laser.

Le dispositif selon l'invention comprend avantageusement une semelle de contact avec l'objet, la semelle étant réalisée en matériau(x) chimiquement neutre(s) vis-à-vis de l'objet.

Dans le cadre de l'invention, l'expression «chimiquement neutre(s) » signifie que la (les) partie(s) considérée(s) est (sont) réalisée(s) en un ou plusieurs matériaux présentant l'ensemble des caractéristiques suivantes :
- un taux de dégazage défini, par exemple, tel que la perte de masse totale est inférieure à 1% selon le test ECSS Q70-2A et tel que la quantité volatile recondensée est inférieure à 0,1% selon le même test,
- une inertie chimique définie, par exemple, telle que la perte ou le gain de masse suite à une potentielle réaction chimique soit inférieure à 1% en masse,
- une aptitude à générer des particules définie, par exemple, telle que le niveau de contamination surfacique soit inférieur à un niveau 100 par exemple, selon la norme IEST 1246D.

Le dispositif selon l'invention peut en outre comprendre des moyens pour générer un coussin d'air non contaminant en dessous de la semelle de contact afin de déplacer le dispositif entre deux surfaces différentes à échantillonner. On peut ainsi facilement déplacer le dispositif entre deux surfaces à échantillonner et analyser ainsi des grandes surfaces d'objet.

L'invention concerne enfin l'application du procédé décrit précédemment ou du dispositif mentionné ci-dessus à l'analyse quantitative de contaminants particulaires de surface dans des zones à environnement maîtrisé. Dans certaines industries (spatial, micromécanique, optique, nanotechnologies mais aussi industrie pharmaceutique et agroalimentaire, hôpitaux...), la maîtrise de la contamination particulaire passe par des prélèvements sur des supports solides sur la ligne de process. Par contre, rares sont les industries qui possèdent leur laboratoire d'analyse chimique. Par conséquent, un dispositif selon l'invention permet de disposer de moyens de contrôle portables et en temps réel de l'état de propreté des surfaces d'un objet.

### BRÈVE DESCRIPTION DES DESSINS

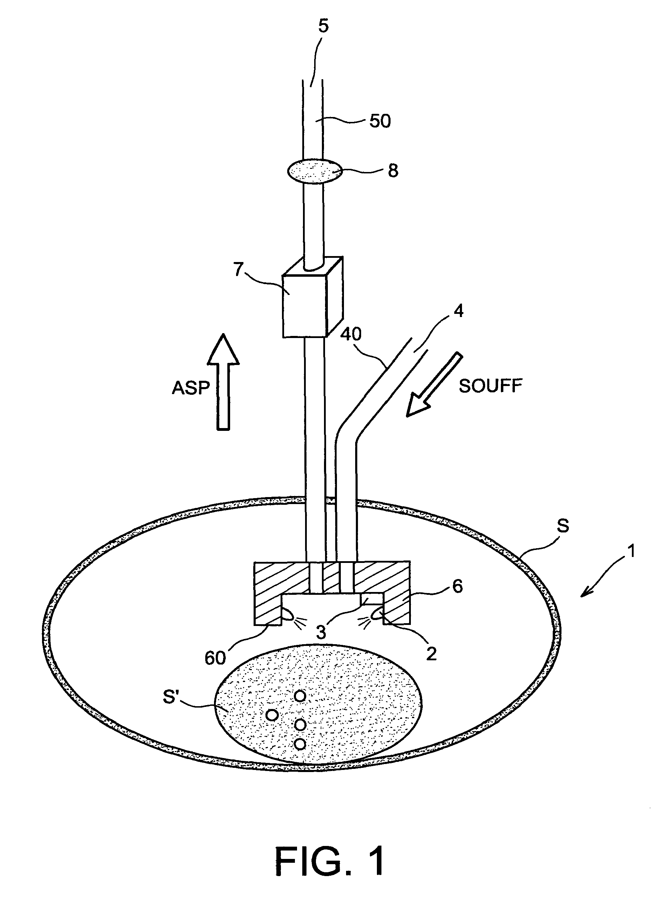

D'autres avantages et caractéristiques de l'invention ressortiront mieux à la lecture de la description détaillée d'un exemple de réalisation faite en référence à la figure unique.

### EXPOSÉ DÉTAILLÉ DE MODES DE RÉALISATION PARTICULIERS

Le dispositif selon l'invention 1 représenté schématiquement permet de quantifier et de confiner les contaminants particulaires de taille unitaire comprise entre une valeur inférieure de l'ordre de 0,1 µm et une valeur supérieure jusqu'au cm, qui sont présents en surface d'un objet S dont on cherche à contrôler et/ou décontaminer la surface totale.

Le dispositif 1 comprend tout d'abord des moyens d'éclairage 2 pour réaliser un éclairage rasant d'une surface échantillonnée S'. Ils peuvent être avantageusement constitués par des diodes laser. L'éclairage rasant est effectué de préférence à l'aide de diodes laser émettant dans la gamme des ultra-violets.

Des moyens de photographie numérique 3 sont prévus pour réaliser des photos numériques de la surface éclairée. Ces moyens de photographie numérique sont adaptés pour déterminer des éléments de taille unitaire comprise entre une valeur X1 de l'ordre de 10 µm jusqu'à une valeur de l'ordre du cm.

Des moyens de soufflage 4 et d'aspiration 5 sont également prévus pour respectivement souffler de l'air propre sur la surface photographiée et pour aspirer l'air soufflé contenant des contaminants particulaires éventuels. Ces moyens de soufflage 4 et 5 comprennent avantageusement un conduit 40, 50.

Dans le mode de réalisation illustré, les diodes laser 2, les moyens de photos numériques 3 et une partie des conduits 40, 50 sont implantés dans un même boitier 6 qui constitue ainsi une tête de détection. L'aéraulique du soufflage et aspiration prévus en dessous de la tête 6 pourra être avantageusement réalisée telle que décrite et revendiquée dans la demande de brevet intitulée « procédé et dispositif de quantification de contaminants particulaires par extraction améliorée » déposée par la demanderesse le même jour que la présente demande.

Un dispositif de comptage optique 7 est implanté en aval. Il est adapté pour quantifier des particules de taille unitaire comprise entre une valeur inférieure X3 de l'ordre de 0,1 µm et une valeur supérieure X2 de l'ordre de 10 µm qui passent dans le conduit 50.

Enfin, le dispositif selon l'invention comprend des moyens de calcul numérique, non représentés qui permettent de déterminer la proportion de pixels photographiques appartenant aux contaminants particulaires présents sur la surface S' par comparaison entre deux photos numériques réalisées respectivement avant et après soufflage et aspiration.

Le boitier 6 comprend une semelle 60 de contact avec l'objet, qui est réalisée en matériau(x) chimiquement neutre(s) vis-à-vis de la surface S de l'objet. Cette semelle 60 peut être avantageusement en téflon. La géométrie de la semelle 60 (par exemple carrée ou circulaire) peut être avantageusement adaptée à la géométrie des surfaces S' à qualifier selon la norme ISO 14644-9.

Le fonctionnement du dispositif 1 selon l'invention est le suivant :
a) positionnement de la partie tête 60 du dispositif 1 sur une surface à analyser S',
b) éclairage rasant de la surface échantillonnée par les diodes laser 2,
c) réalisation d'une première photo numérique de la surface S' éclairée à l'aide de l'appareil photo numérique 3 pour déterminer les éléments de taille unitaire supérieure à la valeur X1 de l'ordre de 10 µm,
d) soufflage d'air propre sur la surface photographiée par le conduit 4 (sens SOUFF sur figure unique),
e) aspiration de l'air soufflé contenant les contaminants particulaires éventuels par le conduit 4 (sens SOUFF sur figure unique) vers le dispositif de comptage optique 7 adapté pour quantifier des particules de taille unitaire comprise entre X3 = 0,1 µm et X2 de l'ordre de 10 µm,
f) réalisation d'une deuxième photo numérique de la même surface éclairée S' dans les mêmes conditions diaphragme, focale, résolution spatiale identiques) que la première photo numérique par l'appareil photo numérique par la cellule photo-numérique 3. Cette étape f) permet de différencier, parmi les éléments, les contaminants particulaires des défauts surfaciques de l'objet ;
g) quantification des particules de taille unitaire supérieure à la valeur supérieure de 10 µm par détermination de la proportion de pixels photographiques appartenant aux contaminants de surface éventuels en comparant la première et la deuxième photos numériques grâce aux moyens de calcul numérique.

La tête 6 du dispositif est maintenue statique, c'est-à-dire qu'elle n'effectue pas de déplacement relatif par rapport à l'objet S pendant le fonctionnement de a) à g).

La tête 6 du dispositif 1 peut éventuellement se déplacer de façon autonome sur coussin d'air non contaminant pour un contrôle téléguidé point par point d'analyse ou automatisé de grande surface.

Tous les contaminants particulaires de surface présents initialement sur la surface S' sont collectés sur une membrane 8 placée en aval du dispositif de comptage optique dans le conduit 50. La membrane 8 comprend des pores de taille unitaire de l'ordre de 0,1 µm. La récupération de la membrane de collecte 8 permet des analyses physico-chimique par la suite. La membrane 8 peut être confinée et subir un traitement chimique ou physico-chimique si les particules contaminant la surface S présentent une toxicité.

L'invention permet d'obtenir les avantages suivants :
- contrôle de la propreté particulaire des surfaces sur une large gamme de tailles de l'ordre du nanomètre à une limite supérieure déterminée en fonction de la nature de l'objet : cette limite supérieure peut être égale 500 µm, voire au cm,
- obtention de preuves objectives de la présence des particules microniques et sub microniques sur les surfaces selon la norme ISO 14644-9,
- obtention d'informations morphologiques (gammes de taille) sur les particules,
- obtention de la distribution surfacique des particules,
- garantie du confinement de la contamination particulaire détachée de la surface pour un confinement/traitement éventuel ou une analyse physico-chimique ultérieure.

## Revendications

1. Procédé de quantification de contaminants particulaires de surface susceptibles d'être présents sur un objet, selon lequel on réalise les étapes suivantes :
a) échantillonnage d'une surface à analyser,
b) éclairage rasants de la surface échantillonnée,
c) réalisation d'une première photo numérique de la surface éclairée pour déterminer des éléments de taille unitaire supérieure à une valeur X1,
d) soufflage d'air propre sur la surface photographiée,
e) aspiration de l'air soufflé contenant les contaminants particulaires éventuels vers un dispositif de comptage adapté pour quantifier des particules de taille unitaire inférieure à une valeur X2,
f) réalisation d'une deuxième photo numérique de la même surface éclairée dans les mêmes conditions que la première photo numérique, afin de différencier, parmi les éléments, les contaminants particulaires des défauts surfaciques de l'objet,
g) quantification des contaminants particulaires de taille unitaire supérieure à X1 par détermination de la proportion de pixels photographiques appartenant aux contaminants de surface éventuels en comparant la première et la deuxième photos numériques.

2. Procédé selon la revendication 1, selon lequel on réalise les étapes a) à g) sans déplacement relatif par rapport à l'objet.

3. Procédé selon la revendication 1 ou 2, selon lequel on réalise après l'étape g) une étape supplémentaire si X1 est inférieure à X2 dans laquelle on effectue une comparaison de quantifications entre les particules aspirées et comptées et les particules quantifiées par photo-numérique.

4. Procédé selon l'une des revendications 1 à 3, selon lequel on collecte en aval du dispositif de comptage les particules aspirées.

5. Procédé selon l'une quelconque des revendications précédentes, selon lequel on réalise un éclairage rasant dans la gamme des ultra-violets.

6. Dispositif (1) de quantification de contaminants particulaires de surface susceptibles d'être présents sur un objet, comprenant :
- des moyens d'éclairage (2) pour réaliser un éclairage rasant d'une surface échantillonnée,
- des moyens de photographie numérique (3) pour réaliser des photos numériques de la surface éclairée, les moyens de photographie numérique étant adaptés pour déterminer des éléments de taille unitaire supérieure à une valeur X1,
- des moyens de soufflage (4, 40) et d'aspiration (5, 50) pour respectivement souffler de l'air propre sur la surface photographiée et pour aspirer l'air soufflé contenant des contaminants particulaires éventuels,
- un dispositif de comptage (7) adapté pour quantifier des particules de taille inférieure à une valeur X2,
- des moyens de calcul numérique pour déterminer la proportion de pixels photographiques appartenant aux contaminants de surface de taille unitaire supérieure à une valeur X1 par comparaison entre deux photos numériques réalisées respectivement avant et après soufflage et aspiration.

7. Dispositif selon la revendication 6, comprenant en outre une membrane de filtration (8) dont la taille de pores est de l'ordre de la valeur inférieure de comptage du dispositif de comptage (X3), la membrane étant montée dans les moyens d'aspiration afin de collecter les contaminants particulaires aspirés.

8. Dispositif selon la revendication 6 ou 7, dans lequel les moyens d'éclairage comprennent des moyens d'éclairage ultraviolet.

9. Dispositif selon l'une des revendications 6 à 8, dans lequel les moyens d'éclairage sont des diodes laser (2).

10. Dispositif selon l'une des revendications 6 à 9, comprenant une semelle de contact (60) avec l'objet, la semelle étant réalisée en matériau(x) chimiquement neutre(s) vis-à-vis de l'objet.

11. Dispositif selon la revendication 10, comprenant en outre des moyens pour générer un coussin d'air non contaminant en dessous de la semelle de contact afin de déplacer le dispositif entre deux surfaces différentes à échantillonner.

12. Application du procédé selon l'une quelconque des revendications 1 à 5 ou du dispositif selon l'une quelconque des revendications 6 à 11, à l'analyse quantitative de contaminants particulaires de surface dans des zones à environnement maîtrisé.

## Patentansprüche

1. Verfahren zur Quantifizierung partikelförmiger Oberflächenverunreinigungen, die geeignet sind, auf einem Gegenstand vorhanden zu sein, gemäß dem die folgenden Schritte durchgeführt werden:
a) Zur Prüfung Auswählen einer zu analysierenden Oberfläche,
b) Beleuchten, mit streifendem Lichteinfall, der zur Prüfung ausgewählten Oberfläche,
c) Durchführen eines ersten Digitalfotos der beleuchteten Oberfläche, um Elemente zu bestimmen, deren Einheitsgröße oberhalb eines Wertes X1 liegt,
d) Ausblasen von Reinluft auf die fotografierte Oberfläche,
e) Ansaugen der ausgeblasenen Luft, welche die etwaigen partikelförmigen Verunreinigungen enthält, und zwar hin zu einer Zählvorrichtung, die ausgebildet ist, Partikel zu quantifizieren, deren Einheitsgröße unterhalb eines Wertes X2 liegt,
f) Durchführen eines zweiten Digitalfotos derselben beleuchteten Oberfläche unter den gleichen Bedingungen wie das erste Digitalfoto, um unter diesen Elementen die partikelförmigen Verunreinigungen von Oberflächenfehlern des Gegenstandes zu unterscheiden,
g) Gtuantifizieren der partikelförmigen Verunreinigungen, deren Einheitsgröße oberhalb von X1 liegt, durch Bestimmen des Anteils der fotografischen Pixel, die zu etwaigen Oberflächenverunreinigungen gehören, durch Vergleichen des ersten und des zweiten Digitalfotos.

2. Verfahren nach Anspruch 1, gemäß dem die Schritte a) bis g) ohne Relativverschiebung bezüglich des Gegenstandes durchgeführt werden.

3. Verfahren nach Anspruch 1 oder 2, gemäß dem nach Schritt g) ein ergänzender Schritt durchgeführt wird, falls X1 unterhalb von X2 liegt, bei dem man einen Vergleich der Quantifizierungen zwischen den angesaugten und gezählten Partikeln und den Partikeln durchführt, die mittels Digitalfotografie quantifiziert wurden.

4. Verfahren nach einem der Ansprüche 1 bis 3, gemäß dem die angesaugten Partikel in Strömungsrichtung hinter der Zählvorrichtung gesammelt werden.

5. Verfahren nach einem der vorhergehenden Ansprüche, gemäß dem eine Beleuchtung mit streifendern Lichteinfall im Ultraviolettbereich durchgeführt wird.

6. Vorrichtung (1) zur Quantifizierung von partikelförmigen Oberflächenverunreinigungen, die geeignet sind, auf einem Gegenstand vorhanden zu sein, aufweisend:
- Beleuchtungseinrichtungen (2), um eine Beleuchtung, mit streifendem Lichteinfall, einer zur Prüfung ausgewählten Oberfläche durchzuführen,
- Digitalfotografieeinrichtungen (3), um Digitalfotos der beleuchteten Oberfläche aufzunehmen, wobei die Digitalfotografieeinrichtungen ausgebildet sind, um Elemente zu bestimmen, deren Einheitsgröße oberhalb eines Wertes X1 liegt,
- Einrichtungen zum Ausblasen (4, 40) und zum Ansaugen (5, 50), um Reinluft auf die fotografierte Oberfläche auszublasen bzw. die ausgeblasene Luft anzusaugen, welche etwaige partikelförmige Verunreinigungen enthält,
- eine Zählvorrichtung (7), die ausgebildet ist, um Partikel zu quantifizierten, deren Größe unterhalb eines Wertes X2 liegt,
- Einrichtungen zur numerischen Berechnung, um den Anteil von fotografischen Pixeln zu bestimmen, die zu Oberflächenverunreinigungen gehören, deren Einheitsgröße oberhalb eines Wertes X1 liegt, und zwar durch Vornehmen eines Vergleichs zwischen zwei Digitalfotos, die jeweils vor und nach einem Ausblasen und Ansaugen realisiert wurden.

7. Vorrichtung nach Anspruch 6, weiter aufweisend eine Filtriermembran (8), deren Porengröße in der Größenordnung des unteren Wertes der Zählung der Zählvorrichtung liegt (X3), wobei die Membran in den Ansaugeinrichtungen angebracht ist, um die angesaugten partikelförmigen Verunreinigungen zu sammeln.

8. Vorrichtung nach Anspruch 6 oder 7, bei der die Beleuchtungseinrichtungen Einrichtungen für eine Ultraviolettbeleuchtung aufweisen.

9. Vorrichtung nach einem der Ansprüche 6 bis 8, bei der die Beleuchtungseinrichtungen Laserdioden (2) sind.

10. Vorrichtung nach einem der Ansprüche 6 bis 9, aufweisend eine Sohle (60) zum Kontakt mit dem Gegenstand, wobei die Sohle aus einem Material/Materialien hergestellt ist, das/die gegenüber dem Gegenstand chemisch neutral ist/sind.

11. Vorrichtung nach Anspruch 10, weiter aufweisend Einrichtungen, um ein nichtverunreinigendes Luftkissen oberhalb der Kontaktsohle zu erzeugen, um die Vorrichtung zwischen zwei unterschiedlichen, zur Prüfung auszuwählenden Oberflächen zu verschieben.

12. Anwenden des Verfahrens nach einem der Ansprüche 1 bis 5, oder einer Vorrichtung nach einem der Ansprüche 6 bis 11, zur quantitativen Analyse von partikelförmigen Oberflächenverunreinigungen in Zonen einer kontrollierten Umgebung.

## Claims

1. A method for quantifying surface particulate contaminants likely to be present on an object, according to which the following steps are performed:
a) sampling a surface to be analyzed,
b) raking lighting the sampled surface,
c) taking a first digital photo of the lighted surface to determine elements with a unit size larger than a value X1,
d) blowing clean air on the photographed surface,
e) suctioning the blown air containing the possible particulate contaminants towards a counting device suitable for quantifying particulates with a unit size below a value X2,
f) taking a second digital photo of the same lighted surface under the same conditions as the first digital photo, so as to differentiate, among the elements, the particulate contaminants from the surface flaws of the object,
g) quantifying particulate contaminants with a unit size larger than X1 by determining the proportion of photographic pixels belonging to the possible surface contaminants by comparing the first and second digital photos.

2. The method according to claim 1, according to which steps a) to g) are carried out without relative movement in relation to the object.

3. The method according to claim 1 or claim 2, according to which after step g), an additional step is carried out if X1 is less than X2 in which the quantifications are compared between the suctioned and counted particulates and the particulates quantified by digital photography.

4. The method according to any one of claims 1 to 3, wherein the suctioned particulates are collected downstream of the counting device.

5. The method according to any preceding claim, in which raking lighting is done in the ultraviolet range.

6. A device (1) for quantifying surface particulate contaminants likely to be present on an object, comprising:
- lighting means (2) for performing raking lighting of a sampled surface,
- digital photography means (3) for taking digital photos of the lighted surface, the digital photography means being suitable for determining elements with a unit size greater than a value X1,
- blowing means (4, 40) and suction means (5, 50) for blowing clean air on the photographed surface and suctioning the blown air containing possible particulate contaminants, respectively,
- a counting device (7) adapted to quantify particulates with a size smaller than a value X2,
- digital computation means for determining the proportion of photographic pixels belonging to the surface contaminants with a unit size larger than a value X1 through comparison between two digital photos taken before and after blowing and suctioning, respectively.

7. The device according to claim 6, also comprising a filtration membrane (8) whereof the pores size is in the vicinity of the lower counting value of the counting device (X3), the membrane being mounted in the suction means in order to collect the suctioned particulate contaminants.

8. The device according to claim 6 or claim 7, wherein the lighting means comprises ultraviolet lighting means.

9. The device according to any one of claims 6 to 8, wherein the lighting means are laser diodes (12).

10. The device according to any one of claims 6 to 9, comprising a contact sole (60) with the object, the sole being made from chemically neutral material(s) relative to the object.

11. The device according to claim 10, also comprising means for generating a non-contaminant air cushion below the contact sole in order to move the device between two different surfaces to be sampled.

12. Application of the method according to anyone of claims 1 to 5 or of the device according to any one of claims 6 to 11, to the quantitative analysis of surface particulate contaminants in controlled environment zones.
